(19) **Europäisches Patentamt**

**European Patent Office**

**Office européen des brevets**

(11) Numéro de publication : **0 546 956 A2**

# (12) DEMANDE DE BREVET EUROPEEN

(21) Numéro de dépôt : **92403392.1**

(22) Date de dépôt : **14.12.92**

(51) Int. Cl.$^5$ : **C08L 1/00,** B65D 65/46

---

(30) Priorité : **12.12.91 FR 9115391**

(43) Date de publication de la demande :
**16.06.93 Bulletin 93/24**

(84) Etats contractants désignés :
**AT BE CH DE DK ES FR GB IT LI LU NL PT SE**

(71) Demandeur : **GOMEZ, Daniel**
**3, rue de Narvik**
**F-38000 Grenoble (FR)**

(71) Demandeur : **CENTRE TECHNIQUE DU PAPIER**
**Rue de la Papeterie, Domaine Universitaire, B.P. 7110**
**F-38020 Grenoble Cédex (FR)**

(72) Inventeur : **Gomez, Daniel**
**3, rue de Narvik**
**F-38000 Grenoble (FR)**
Inventeur : **Lefebvre, Gaston**
**St. Mury, Mont Aynard**
**F-38190 Brignoud (FR)**
Inventeur : **Gervason, Georges**
**6, rue Tristant Corbières**
**F-38400 Saint Martin d'Heyres (FR)**
Inventeur : **Palassof, Simon**
**32, Bd. Maréchal Foch**
**F-38000 Grenoble (FR)**

(74) Mandataire : **Clisci, Serge et al**
**S.A. FEDIT-LORIOT & AUTRES, CONSEILS EN PROPRIETE INDUSTRIELLE, 38, Avenue Hoche**
**F-75008 Paris (FR)**

---

(54) **Matériau végétal expansé, recyclable, son procédé de fabrication et son utilisation dans les domaines du calage, de la protection, de l'emballage, des revêtements et des matériaux en feuille.**

(57)    La présente invention concerne un nouveau matériau essentiellement végétal ayant une densité inférieure à 300 kg/m$^3$, ledit matériau végétal étant caractérisé en ce qu'il renferme
(a) des fibres végétales, de préférence cellulosiques,
(b) une charge végétale pulvérulente ayant une granulométrie inférieure à 1,5 mm et de préférence comprise entre 0,01 et 0,5 mm, et provenant de l'industrie du bois, de déchets de bois ou de végétaux et/ou de l'industrie agroalimentaire, et
(c) une substance amylacée, de préférence un polymère naturel amylacé,
et en ce qu'il a été expansé sous l'action de
(d) un agent d'expansion incorporé dans le mélange desdites fibres, de ladite charge végétale et de ladite substance amylacée.
L'invention concerne également le procédé de préparation de ce matériau expansé à partir des ingrédients (a), (b), (c) et (d) ci-dessus, ainsi que son utilisation notamment dans le domaine du calage, de l'emballage, des revêtements, de la protection, d'une part, et dans le domaine des supports d'enduction et des papiers et cartons bouffants, d'autre part.

## DOMAINE DE L'INVENTION

La présente invention concerne un nouveau matériau végétal expansé recyclable, rigide, de densité inférieure à 300 kg/m³, obtenu à partir de matières essentiellement végétales, ayant de bonnes aptitudes à la compression, à l'emboutissage et résistant à la déformation, à la perforation, aux vibrations et aux chocs.

Ledit matériau végétal renferme des fibres végétales filiformes, une charge végétale, une substance amylacée telle que l'amidon et les farines céréalières et a été expansé au moyen d'un agent d'expansion d'origine chimique ou de synthèse, ou d'origine biologique végétale ou animale, ou un gaz inerte.

La présente invention concerne également le procédé de préparation dudit matériau et son utilisation dans le domaine du calage, de la protection, de l'emballage, des revêtements et notamment en remplacement des matières ou mousses plastiques expansées alvéolaires.

De plus, ce procédé peut être avantageusement mis en oeuvre pour la fabrication de papiers, cartons et supports d'enduction bouffants. Selon l'invention, on propose ainsi une technologie d'expansion des matériaux en feuille obtenus par des procédés papetiers ou autres.

Le matériau végétal objet de l'invention, représente un débouché industriel intéressant pour les produits agricoles, d'une part, et une voie importante de valorisation des sous-produits de la production agricole, de l'exploitation forestière et de l'industrie du bois, d'autre part.

Ce matériau obtenu à partir de matières premières végétales renouvelables, satisfait pleinement aux nouvelles préoccupations concernant le recyclage des déchets et la protection de l'environnement. Ce matériau répond également à la nécessité de mieux exploiter toutes les matières, sous-produits ou déchets végétaux disponibles et contribue à la diminution de la consommation de matières plastiques et synthétiques dérivées du pétrole, pour la production de produits industriels.

## ART ANTERIEUR

Il existe une grande variété de matériaux de calage et de protection.

Les mousses plastiques sont bien connues. Ce sont essentiellement des pièces moulées ou des produits formés de matières plastiques expansées notamment à base de polystyrène, polyéthylène, polyuréthane, caoutchouc naturel ou caoutchouc synthétique. Ces matériaux plastiques de densité variable entre 15 et 120 kg/m³, offrent en général de bonnes caractéristiques contre les chocs, les vibrations et la compression mais ils sont faiblement résistants à la perforation et ils sont difficilement recyclables.

La production de films plastiques avec bulles d'air est également bien connue. Ces matériaux sont obtenus par thermoformage d'une feuille de polyéthylène à laquelle est thermosoudée une autre feuille pour former une pluralité d'alvéoles constituant un coussin d'air.

On connaît aussi une grande variété de mousses de chlorure de polyvinyle, résines urée-formaldéhyde, résines phénoliques, silicones, résines époxydes et autre polymères synthétiques contenant ou non des matières de remplissage : fibres textiles, fibres de bois, débris de liège, copeaux de bois, et différents additifs, agents plastifiants, d'imprégnation et de fixation. Tous ces matériaux en plastique, de propriétés très variables, sont générateurs de nuisances pour l'environnement.

Le carton ondulé est également utilisé pour le calage et la protection mais il n'a pas d'aptitude à l'emboutissage et résiste mal à la perforation. Le carton ondulé peut également être associé à des structures plastiques extrudées à double paroi armées de mousse polystyrène comme décrit dans la demande de brevet français n° 81 21 721 du 16 novembre 1981, mais le produit complexe comportant une matière plastique est difficilement recyclable.

Il existe aussi des feuilles minces pour enrobage et des matériaux de protection de surface en polystyrène, polyéthylène expansé ou mousse de polyuréthane, dont les densités varient entre 20 et 120 kg/m³, des produits "vrac" et des matériaux de remplissage en billes de polystyrène expansé, qui ont des résistances faibles ou moyennes aux chocs et aux vibrations et qui présentent les mêmes inconvénients pour la recyclabilité que les matières plastiques précitées.

Sur le marché existent également des mousses plastiques souples ou rigides réalisées, *in situ*, des mousses de polyuréthane en kits cartons avec ensemble aérosol contenant tous les composants nécessaires à la production de mousse rigide soit coulée soit par pulvérisation. Ces procédés de calage connus depuis plusieurs années, assurent une bonne protection contre les vibrations et les chocs mais ils ont l'inconvénient majeur d'être difficilement recyclables.

Il existe aussi des coussins de calage gonflables en matière plastique.

On sait fabriquer un produit aéré à base de cellulose, selon la technique de la cellulose moulée, pour obtenir des emballages capables d'amortir les vibrations et les chocs au cours du transport et de la manutention. Le produit moulé obtenu par aspiration à travers une toile formant le moule de l'objet à protéger, est constitué de strates élémentaires. Ce produit qui est en fait un carton bouffant, et a une faible épaisseur (2 à 3 mm), est très peu expansé et a, de ce fait, une capacité d'amortissement limitée, de plus il n'est pas apte à l'emboutissage.

On sait aussi fabriquer des produits plus expansés du type de celui décrit dans le document de brevet FR-A-2 503 026 (P.M. CHEVALIER), qui fait état d'une mousse de fibres de cellulose dans laquelle a été introduite des billes de polystyrène expansées et fondues par action thermique. Ce produit qui renferme des matières plastiques, est soit trop rigide, soit trop souple et il ne présente pas les caractéristiques souhaitées en ce qui concerne le compromis rigidité/ souplesse pour l'amortissement des vibrations et pour l'emboutissage.

On connait également du brevet français FR-A-1 422 835 (CTP) et de son addition No 90 003 un matériau fibreux expansé, dénommé "GRANOFIBRE", par enroulement des fibres mais ce matériau est trop souple et non emboutissable en l'état.

Il est aussi bien connu d'utiliser dans le calage, de la paille, des déchets de papiers en serpentin, des complexes de papiers froissés, des ouates, des coussins ou sacs en papier essentiellement en kraft écru remplis de matières cellulosiques, mais ces différents matériaux présentent l'inconvénient majeur d'avoir une faible rigidité d'ensemble, une capacité d'amortissement réduite et ils ne sont pas emboutissables.

Il existe aussi des matériaux cellulosiques alvéolaires bien connus des ménages : les éponges obtenues à partir de cellulose régénérée. Ces matériaux ne conviennent également pas pour le calage et la protection dans les emballages car leur rigidité d'ensemble et leur capacité d'amortissement est très faible.

On sait que des tentatives de production d'un matériau alvéolaire ne contenant que des fibres de cellulose ont été entreprises pour obtenir des panneaux rigides. Il se trouve que ce matériau, bien que rigide, ne présente aucune capacité d'amortissement et n'est pas emboutissable.

On connait également un matériau en plaque, léger à base de fibres végétales, appelé "Isorel mou" utilisé dans le bâtiment. Le matériau est formé de nombreuses couches (50 pour une épaisseur de 1 cm), peu liées entre elles, les fibres étant disposées parallèlement au plan du matériau. La structure en couches faiblement liées, conduit à un matériau "cassant" peu déformable à la flexion et faiblement emboutissable.

Le mais "Pop Corn" est un matériau végétal expansé à la chaleur. L'agent d'expansion est contenu dans le grain. Ce matériau a été utilisé dans le calage en vrac "chips". Le Pop Corn expansé est cassant à la flexion et ne permet pas de réaliser un matériau en plaque qui soit rigide et emboutissable.

On sait par ailleurs que les matériaux en feuille non expansés obtenus à partir de fibres cellulosiques, d'une charge végétale et d'un liant n'ont pas d'aptitude à l'emboutissage, surtout s'ils ont une faible épaisseur.

On connaît de la demande de brevet publiée GB-A-2 050 459 une composition pâteuse et un procédé de préparation d'un article de conditionnement ou d'emballage à partir de celle-ci.

La composition pâteuse comprend trois ou quatre composants, à savoir :

(i) de l'eau (de préférence pas plus de 80 % en poids de la composition pâteuse),

(ii) un matériau particulaire constitué par des fibres naturelles, synthétiques ou dites de récupération (notamment des fibres cellulosiques) ou une charge minérale pulvérulente (argile, craie ou charbon),

(iii) un hydrocolloide liant toute l'eau de ladite composition pâteuse, qui est notamment de l'amidon ou un produit contenant de l'amidon tel que la farine de céréale, et

(iv) le cas échéant, un agent d'expansion.

Le procédé de préparation tel que préconisé par GB-A-2 050 459, comprend l'extrusion ou l'injection/moulage de ladite composition pâteuse.

On connaît également de la demande internationale PCT publié WO-A-90/14935 une autre solution technique pour l'obtention, par extrusion/moulage, d'articles utiles en tant qu'éléments de construction, d'isolation ou d'emballage. Selon cette solution antérieure,

(1) on traite sous pression (15-600 bars) et à chaud (125-250°C) un mélange comprenant

(i) un matériau fibreux, notamment des fibres cellulosiques, des copeaux de bois et (voir WO-A-90/14935, page 3 lignes 2-6 et exemple 2 page 11 ligne 17) du caoutchouc, et

(ii) un liant biopolymère, notamment de l'ami- don ou un produit contenant de l'amidon tel que la farine de céréale,

pour fondre ou gélifier ledit mélange, puis

(2) on supprime rapidement la pression pour réaliser une expansion spontanée.

Par ailleurs, selon WO-A-90/14935, il est recommandé d'incorporer dans le mélange de l'étape (1) ci-dessus, un matériau hydrophobe, d'une part, et il est signalé que l'on peut également introduire dans ledit mélange un agent d'expansion constitué par un alcool ou une cétone (voir revendication 9), d'autre part.

La solution technique préconisée par la présente invention se différencie des solutions techniques antérieures de GB-A-2 050 459 et WO-A-90/14935, d'une part, par les modalités de mise en oeuvre, et d'autre part, surtout par l'utilisation d'une charge végétale, les composants essentiels selon l'invention étant (a) des fibres végétales, (b) une charge végétale (et non une charge minérale), (c) une substance amylacée intervenant en tant que liant, et (d) un agent d'expansion.

On verra dans les essais comparatifs fournis ci-après, que l'utilisation d'une charge végétale de densité inférieure à 500 kg/m³ (et mieux inférieure à 300 kg/m³) et de granulométrie contrôlée, qui est identique ou analogue à celle qui est décrite dans les demandes internationales PCT publiées WO-A-89/05884 et WO-A-90/15900 (ces deux demandes PCT recommandent ladite charge végétale pour la fabrication de papiers et cartons, pour la réalisation de supports d'enduction et pour l'obtention de revêtements) permet de diminuer la densité du produit final et d'améliorer l'emboutissabilité et la résistance à la flexion.

## BUT DE L'INVENTION

Un des buts de l'invention est de pallier les inconvénients précités.

Un autre but de l'invention est de proposer une nouvelle solution technique faisant appel à la technologie papetière et/ou à la technologie d'extrusion ou d'injection, pour l'obtention d'un matériau expansé qui soit (i) rigide, (ii) résistant aux contraintes mécaniques telles que chocs, perforations, vibrations et déformations, (iii) recyclable et (iv) non polluant vis-à-vis de l'environnement eu égard à son caractère biodégradable.

Ledit matériau est destiné notamment à remplacer les mousses plastiques, en particulier les mousses de polystyrène, polyéthylène, polypropylène, polyester et polyester/verre dans le domaine du calage, de la protection, de l'emballage et des revêtements en feuilles ou panneaux.

## OBJET DE L'INVENTION

Selon un des aspects de l'invention, on préconise un nouveau matériau expansé essentiellement végétal, ledit matériau, qui comprend des fibres, une charge et une substance amylacée, et a une densité inférieure à 300 kg/m³, étant caractérisé en ce qu'il renferme

(a) des fibres végétales, de préférence cellulosiques,

(b) une charge végétale pulvérulente ayant une granulométrie inférieure à 1,5 mm et de préférence comprise entre 0,01 et 0,5 mm, et provenant de l'industrie du bois, de déchets de bois ou de végétaux et/ou de l'industrie agroalimentaire, et

(c) une substance amylacée, de préférence un polymère naturel amylacé,

et en ce qu'il a été expansé sous l'action de

(d) un agent d'expansion incorporé dans le mélange desdites fibres, de ladite charge végétale et de ladite substance amylacée.

De façon avantageuse, ledit matériau renfermera

(a) de 15 à 85 parties en poids de fibres végétales,

(b) de 5 à 80 parties en poids d'une charge végétale, et

(c) au plus 70 parties en poids d'une substance amylacée choisie parmi l'ensemble constitué par l'amidon, les matériaux contenant de l'amidon et leurs mélanges,

en utilisant pour l'expansion

(d) au plus 20 parties en poids d'un agent d'expansion.

Dans ce mode préféré, ledit matériau est expansé *in situ* par incorporation ou libération d'un gaz inerte et présente après expansion une densité comprise entre 20 et 250 kg/m³ et, avantageusement, une dureté Shore comprise entre 10 et 150.

Selon un autre aspect de l'invention, on préconise un procédé de préparation d'un matériau essentiellement végétal et expansé à partir (a) de fibres végétales, (b) d'une charge végétale, (c) d'une substance amylacée, de préférence un polymère naturel amylacé et (d) d'un agent d'expansion, ledit procédé étant caractérisé en ce qu'il comprend les étapes consistant à :

(A) préparer un mélange homogénéisé de fibres (a), de charge végétale (b) et de substance amylacée (c), et

(B) sécher ledit mélange à une température comprise entre 20 et 200°C,

l'agent d'expansion (d) étant introduit

(i) lors de la préparation du mélange fibres/charge végétale/substance amylacée,

(ii) dans le mélange fibres/charge végétale/ substance amylacée préalablement formé, avant séchage, et/ou

(iii) dans le mélange fibres/charge végétale/ substance amylacée, pendant le séchage.

Selon un autre aspect de l'invention, on préconise l'utilisation dudit matériau expansé notamment dans le domaine du calage, de l'emballage, des revêtements et de la protection, d'une part, et dans le domaine des supports d'enduction et des papiers et cartons bouffants, d'autre part.

## DESCRIPTION DETAILLEE DE L'INVENTION

Selon l'invention, par matériau expansé "végétal" ou "essentiellement végétal", on entend un matériau qui est constitué principalement de composants (ici les fibres, la charge et le liant) d'origine végétale et qui a été expansé (de préférence au moyen d'un agent d'expansion naturel tel que levures ou ferments).

Conformément au premier aspect précité, l'invention concerne un matériau végétal qui est essentiellement élaboré à partir de matières naturelles ou non polluantes vis-à-vis de l'environnement, à savoir : des fibres végétales (a), une charge végétale (b), une substance amylacée (de préférence ici un polymère naturel amylacé) (c) et un agent d'expansion (d).

La distinction entre les moyens (b) et (c) peut sembler relativement ténue. De façon pratique, il convient de retenir que le moyen (c), à savoir la substance amylacée, agit en tant qu'agent assurant la cohésion du produit final (i.e. "agent liant"), alors que le moyen (b), à savoir la charge végétale, ne fournit que de faibles liaisons vis-à-vis des fibres (i.e. charge végétale "non liante").

De préférence, le matériau végétal sera élaboré à partir des quatre constituants essentiels que sont les fibres végétales (a), la charge végétale (b), la substance amylacée (c) et l'agent d'expansion (d), selon les quantités pondérales suivantes :
(a) de 15 à 85 parties en poids de fibres végétales,
(b) de 5 à 80 parties en poids d'une charge végétale,
(c) de 1 à 20 parties en poids d'une substance amylacée choisie parmi l'ensemble constitué par l'amidon, les matériaux contenant de l'amidon, et leurs mélanges, et
(d) de 0,01 à 10 parties en poids d'un agent d'expansion.

Comme indiqué ci-dessus, le matériau végétal est de façon fondamentale constitué essentiellement de matières végétales. Il est entièrement recyclable et est composé de fibres cellulosiques, d'une charge végétale particulaire ou d'agglomérats de ladite charge végétale faiblement liés physico-chimiquement, d'une substance amylacée notamment une farine de céréale ou de légumineuse, et est obtenu sous l'action d'un agent d'expansion tel qu'un agent levant d'origine chimique et/ou biologique, tant végétale qu'animale, ou encore un gaz inerte. Les substances amylacées, et notamment les polymères naturels amylacés, constituent des parois ou membranes végétales de longueur voisine de celle des fibres et de largeur supérieure. Ces substances amylacées sont aussi des agents de rigidification et interviennent comme indiqué ci-dessus pour assurer la cohésion du matériau végétal expansé final.

Les ingrédients que sont lesdites fibres, lesdites parois végétales, lesdites particules de charge végétale (ou les agglomérats desdites particules) sont distribués de façon aléatoire dans les trois dimensions, en formant des enroulements, des enchevêtrements très solides de fibres, de charge végétale et de parois végétales entremêlées.

Dans le matériau selon l'invention, les particules végétales sont faiblement liées physico-chimiquement et sont fixées mécaniquement par imbrication dans ledit matériau. L'enchevêtrement des fibres, des particules de charge et des parois végétales laisse place à de nombreux espaces vides constitués de volumes dont les trois dimensions sont du même ordre d'importance et de formes aléatoires et complexes résultant de l'enchevêtrement très aléatoire des particules de formes, de souplesse et de dimensions variables. Ces espaces vides ont été obtenus par malaxage des charges végétales, des composants fibreux, des substances amylacées avec introduction d'air ou d'un autre gaz inerte, afin d'obtenir un mélange homogène dans un cuvier, bac ou extrudeuse appropriés. Les particules élémentaires de charges végétales ou les agglomérats de charges végétales initient et favorisent l'action d'enroulement, d'enchevêtrement des fibres, autour des charges végétales ou des agglomérats de charges végétales et des parois végétales obtenues à partir des substances amylacées.

Selon l'invention, les parois végétales filiformes sont obtenues par l'emploi d'amidon et notamment de substance contenant de l'amidon comme les farines céréalières alimentaires, les farines de légumineuses et/ou les sous-produits de la production desdites farines.

De plus, selon l'invention, les espaces vides sont agrandis dans les trois dimensions par introduction d'air ou d'un autre gaz inerte au cours de la préparation du mélange fibres/charge végétale/substance amylacée, avant et/ou pendant le séchage, et/ou de préférence par l'action d'un autre agent d'expansion chimique et/ou biologique naturel ou de synthèse. Cette expansion est généralement catalysée sous l'effet de la température au cours du séchage du matériau mais elle peut être initiée dès la préparation du mélange homogène fibres/charge végétale/substance amylacée selon (i) la concentration de ce mélange et (ii) le type et la dose d'agent d'expansion. L'expansion se poursuit généralement pendant la phase d'égouttage du matériau avant le séchage. L'agent d'expansion provoque diverses transformations chimiques et biochimiques avec production d'un gaz et principalement de gaz carbonique, qui rompt les liaisons liquides formées par l'eau entre les composants fibreux et la charge végétale et écarte les particules élémentaires entre elles, en limitant ainsi la formation de liaisons physico-chimiques. Ce même effet peut être obtenu de la même façon lorsque l'agent d'expansion est un gaz inerte.

Selon l'invention, les particules élémentaires de charge végétale ont des dimensions inférieures à 1,5 mm et avantageusement inférieures à 1 mm, ce qui signifie que 100 % des particules de la charge végétale traversent un tamis à mailles carrées de 1,5 x 1,5 mm, et avantageusement, un tamis à mailles carrées de 1 x 1 mm. La charge végétale peut être compactée sous forme d'agglomérats de particules élémentaires faiblement liées par liaisons physico-chimiques. Ladite charge et lesdits agglomérats selon l'invention auront de préférence un diamètre moyen compris entre 0,01 et 0,5 mm.

Le matériau végétal expansé selon l'invention est caractérisé par une densité inférieure à 300 kg/m$^3$ et notamment une densité comprise entre 20 et 250 kg/m$^3$, et avantageusement une dureté Shore comprise entre 10 et 150 et notamment entre 20 et 80.

Le matériau végétal expansé selon l'invention peut être obtenu suivant un procédé papetier classique, d'une part, ou suivant une technique d'extrusion ou d'injection/moulage, d'autre part. Le matériau peut également être obtenu à partir d'un mélange concentré des quatre ingrédients essentiels (a, b, c et d) puis homogénéisé au moyen d'une extrudeuse bi-vis corotative classique du type de celle utilisée dans les industries des plastiques, de la chimie et de l'agro-alimentaire, ou du type de celle utilisée pour le défibrage de copeaux de bois ou pour la fabrication de pâtes cellulosiques à haut rendement comme le procédé "BIVIS" mis au point par le CTP et la société CLEXTRAL ; vient ensuite l'opération de séchage avec expansion. L'ensemble de ces opérations peut être effectué soit de façon continue, soit de façon discontinue.

Le matériau végétal expansé selon l'invention peut se présenter sous la forme d'un produit en feuille (plus ou moins expansé), d'un panneau, d'un produit moulé ou encore sous forme de morceaux, flocons ou "chips", de dimensions et de volumes variables.

Toutes les fibres végétales classiques de l'industrie papetière (i.e. les fibres cellulosiques) conviennent selon l'invention, notamment celles provenant des essences de bois de résineux, de feuillus et d'autres plantes annuelles, qui sont produites à partir de procédés papetiers conventionnels : pâtes chimiques kraft ou bisulfite, mi-chimiques, mécaniques, par voie humide ou par voie sèche (raffineurs, meules, pâtes fluff), thermomécaniques, chimico-thermomécaniques, et pâtes obtenues à partir du procédé "BIVIS" précité et notamment avec des plantes annuelles (pailles).

Ces fibres végétales peuvent provenir de matières vierges mais également de vieux papiers (magazines, journaux, catalogues notamment), de rognures de production ou de façonnage, de déchets cellulosiques très divers provenant de la collecte sélective des ordures ménagères, d'emballages en papiers ou cartons recyclés, ou de boues d'épuration.

D'un point de vue pratique, on préconise d'utiliser pour les fibres cellulosiques vierges, des fibres peu raffinées ou non raffinées ayant un degré SR inférieur ou égal à 50 et notamment un degré SR inférieur ou égal à 30 ; en revanche, les fibres cellulosiques de récupération peuvent avoir un degré SR supérieur à 50.

De façon avantageuse, la charge végétale non liante utilisable selon l'invention sera une charge végétale micronisée conforme aux demandes internationales PCT publiées WO-A-89/05884 et WO-A-90/15900 précitées et incorporées ici à titre de référence. Une telle charge provient de déchets de bois ou de végétaux en provenance de l'exploitation forestière (rémanents, petites branches, broussailles, souches, racines), de sous-produits de l'industrie du sciage et du placage (sciure, poussières de ponçage, petites brisures de bois), de la production de céréales : pailles et sous-produits de la production de blé, d'orge, d'avoine, de seigle, de son de blé, déchets de plantes annuelles, rafles de mais, enveloppes externes des grains de céréales, d'oléagineux, de la production vinicole, et de racines de manioc.

La charge végétale peut également provenir des déchets ou sous-produits de la fabrication de farines de cérérales et de légumineuses.

Cette charge végétale peut être également produite à partir d'emballages en bois (notamment containers et palettes en bois) recyclés, et de bois déclassés en provenance des parcs à bois des unités de fabrication de pâtes (brisures, copeaux hors normes, écorces).

La substance amylacée est, comme indiqué ci-dessus, constituée d'amidon ou d'un matériau contenant de l'amidon. Elle est par sa nature un polymère, qui peut être d'origine naturelle, notamment végétale, tel que l'amidon ou la farine de céréales ou de légumineuses, ou d'origine semi-synthétique, tel que les amidons modifiés par voie enzymatique, chimique ou thermique.

En bref, la substance amylacée utile selon l'invention, contiendra un ou plusieurs polymères amylacés, de préférence naturels intervenant en tant que moyens asurant la cohésion du produit expansé final. Plus précisément, ces substances amylacées seront avantageusement des farines céréalières ayant des taux de bluttage plus ou moins importants, comme les farines de blé, de seigle, de sarrasin, de mais, d'orge, d'avoine, ou des farines de légumineuses. Ces farines sont utilisées à l'état de poudre et se présentent sous la forme de particules ayant une granulométrie moyenne inférieure à 0,3 mm, de préférence une granulométrie moyenne inférieure à 0,2 mm et mieux une granulométrie moyenne d'environ 0,08-0,1 mm. Les farines céréalières peuvent être, le cas échéant, selon leur mode d'obtention, en association avec des sous-produits de la production de céréales communément appelés "issues" tels que le son de blé, d'une part, et éventuellement, selon leur mode d'utilisation, d'autres produits tels que les dextrines, les protéines, les colles animales, la gélatine, les gommes arabiques, les alginates, les lignosulfonates, les dérivés cellulosiques comme la carboxyméthylcellulose, l'éthylméthylcellulose, et le carboxyméthylamidon, d'autre part. De façon pratique, le polymère amylacé sera avantageusement choisi parmi l'ensemble constitué par les farines de céréales, les farines de légumineuses, les issues desdites farines et leurs mélanges.

Si nécessaire, les protéines associées à l'amidon dans la matière végétale de départ peuvent être écartées par turbo-séparation comme cela est le cas dans le cadre de la fabrication des farines de blé. Il est connu qu'une farine de blé est le résultat de la comminution de l'amande du grain dépouillé de son enveloppe ; il s'agit d'agglomérats formés de grains d'amidon et, entre ces grains, de protéines friables qui assurent la cohésion d'ensemble. La friabilité des protéines permet, par broyage et micronisation, de réduire la totalité desdits agglomérats en grains d'amidon libres, d'une part, et en fragments de protéines facilement séparés par turbo-séparation, d'autre part.

On utilisera avantageusement selon l'invention, de 1 à 20 parties en poids de substance amylacée.

Selon l'invention, l'agent d'expansion sera notamment choisi parmi l'ensemble constitué par

- les gaz inertes (tels que air, azote, argon, etc.),
- les colloides entraîneurs de gaz,
- les matériaux libérant un gaz inerte par voie enzymatique, par fermentation ou sous l'action de la chaleur, et,
- leurs mélanges.

Parmi les colloides entraîneurs de gaz qui conviennent, on peut notamment citer les colloides entraîneurs d'air qui sont couramment utilisés dans la fabrication, par malaxage, des bétons colloidaux légers, d'une part, et les colloides entraîneurs d'oxygène tels que l'hémoglobine contenue dans les hématies, le sang et les extraits de sang solides ou liquides, d'autre part.

Parmi les substances capables de libérer un gaz sous l'action de la chaleur, on peut notamment citer les ferments et levures (anaérobies ou aérobies) comme les "ferments figurés" composés de microorganismes (champignons et bactéries) et les "ferments solubles" qui sont constitués d'enzymes, de catalyseurs biologiques, produits par des cellules vivantes animales ou végétales ou leurs sécrétions. Conviennent plus particulièrement, les ferments et levures alimentaires pour la boulangerie et la pâtisserie, d'une part, et la levure de bière, d'autre part.

Ledit agent d'expansion peut être également une levure chimique alimentaire à base de bicarbonate de sodium et/ou d'ammonium, qui réagit à chaud en donnant du $CO_2$ par décomposition thermique, ou encore de l'acide ascorbique, qui est un produit naturel couramment employé dans l'industrie alimentaire. Un tel agent d'expansion peut également contenir un pyrophosphate.

En variante, ledit agent d'expansion peut être un liquide logé dans une membrane frangible, ledit liquide donnant un gaz inerte sous l'action de la chaleur.

Selon une autre variante, ledit agent d'expansion peut être un gaz inerte susceptible d'être combiné à l'un quelconque des moyens (d) précités. Un tel gaz inerte peut être introduit, soit dans la préparation du mélange fibres végétales/charge végétale/polymère naturel amylacé, soit avant ou pendant le séchage du matériau végétal. En pratique, l'amélioration de l'expansion du matériau peut être obtenue en introduisant de l'air ou un autre gaz naturel inerte lors du malaxage du mélange constitué par l'ensemble des moyens (a), (b), (c) et (d), avant le séchage ou pendant ledit séchage.

Selon l'invention, on utilisera avantageusement 0,01 à 10 parties en poids d'agent d'expansion pour l'obtention du matériau végétal expansé.

Le cas échéant, on peut ajouter au mélange constitué par l'ensemble des moyens (a), (b), (c) et (d), dénommé ci-après mélange de base par commodité, en fonction des applications souhaitées, divers additifs auxiliaires usuels de la papeterie. Ces additifs auxiliaires peuvent être notamment les suivants :

- les charges minérales usuelles, notamment celles qui sont contenues dans les papiers, cartons et emballages recyclés, à savoir le talc, le kaolin, le carbonate de calcium, le sulfate de calcium, le blanc satin et leurs mélanges ;
- les agents de collage utilisés dans l'industrie papetière pour réduire la sensibilité à l'eau, tels que les colophanes (en anglais : "rosin materials") éventuellement modifiées, les émulsions de paraffine, les alkylcétènes dimères, et les produits couramment utilisés dans les emballages devant venir en contact avec les substances alimentaires ;
- les agents de régulation du pH comme l'alun et l'acide sulfurique ;
- les agents de rétention anionique ou cationique, notamment les floculants ;

- les agents de coloration ;
- les agents fongicides (bien entendu dans la mesure où, dans les conditions d'emploi, ils n'agissent pas substantiellement avant ou au début du séchage sur les champignons contenus dans les levures) ; et,
- les agents lubrifiants.

Selon un mode préféré de réalisation du procédé de préparation visé ci-dessus, les étapes (A) et (B) sont réalisées par voie papetière, le mélange homogénéisé de l'étape (A) étant en suspension aqueuse.

Selon un autre mode préféré de réalisation dudit procédé, l'étape (B) est réalisée selon une technique de l'industrie des matières plastiques ou de l'agro-alimentaire notamment au moyen d'une extrudeuse. Dans ce cas, le séchage du stade (B) est un traitement thermique que l'on peut également appeler "cuisson". En particulier, la cuisson de l'étape (B) peut être réalisée dans un extrudeur en amont de la tête d'extrusion, ou d'injection/moulage.

En bref, le matériau végétal selon l'invention, qui a été expansé *in situ* par incorporation ou libération d'un gaz, présente après expansion une densité comprise entre 20 et 250 kg/m$^3$, d'une part, et une dureté Shore comprise entre 10 et 150, et notamment entre 20 et 80.

Selon un mode particulier de réalisation (notamment selon une technique papetière ou selon une technique de l'industrie des matières plastiques ou agro-alimentaires), le procédé de l'invention, comprendra les étapes consistant à :

(1°) faire appel à une suspension aqueuse (diluée ou très concentrée) de fibres végétales ;

(2°) incorporer dans ladite suspension aqueuse du stade 1°, la charge végétale sous agitation ;

(3°) incorporer sous agitation dans la suspension aqueuse résultante obtenue au stade 2°, la substance amylacée, et le cas échéant, au moins un des additifs papetiers choisis parmi l'ensemble constitué par les charges minérales, les agents de collage, les agents de régulation de pH, les agents de rétention, les colorants, les fongicides et les agents lubrifiants ; et

(4°) sécher le mélange résultant ;

ledit agent d'expansion étant introduit à l'étape 2°, à l'étape 3°, avant l'étape 4° ou pendant l'étape 4°.

De façon avantageuse, selon ce mode de réalisation particulier, le procédé de préparation du matériau végétal mettra en oeuvre

- 15 à 85 parties en poids de fibres végétales à l'étape 1°,
- 5 à 80 parties en poids de charge végétale à l'étape 2°,
- au plus 70 parties en poids de substance amylacée (ou polymère naturel amylacé) à l'étape 3°, et
- au plus 20 parties en poids d'agent d'expansion introduit à l'étape 2°, à l'étape 3°, avant l'étape 4° et/ou pendant l'étape 4° ;

et mieux

- 15 à 85 parties en poids de fibres végétales à l'étape 1°,
- 5 à 80 parties en poids de charge végétale à l'étape 2°,
- 1 à 20 parties en poids de substance amylacée (ou polymère naturel amylacé) à l'étape 3°, et
- 0,01 à 10 parties en poids d'agent d'expansion introduit à l'étape 2°, à l'étape 3°, avant l'étape 4° et/ou pendant l'étape 4°.

De façon pratique, dans le procédé selon l'invention, les étapes 1°-3° et, le cas échéant, l'étape 4° seront mises en oeuvre selon des techniques papetières ou des techniques d'extrusion et/ou d'injection/moulage.

Dans la suspension obtenue à l'issue de l'étape 3°, l'ensemble du mélange constitué par les fibres végétales, la charge végétale, la substance amylacée et, s'il est présent, l'agent d'expansion est notamment à une concentration comprise entre 0,1 et 90 % p/v et de préférence entre 2 et 60 % p/v.

Selon un mode de réalisation préféré du procédé selon l'invention, l'on préconise à l'issue de l'étape 3° un égouttage, et le séchage (ou cuisson) suivant l'étape 4° est réalisé avec un gradient de température de 20°C à 200°C, de préférence avec un gradient de température de 50°C à 180°C, ledit gradient de température assurant l'expansion dudit matériau végétal au moyen de l'agent d'expansion.

Avec certains agents d'expansion, tels que notamment la levure de boulangerie et la levure de bière, l'expansion débute ou est initialisée dès la température ambiante (c'est-à-dire à partir de 20°C environ), quand le moyen (d) est mis en contact avec le mélange fibres/ charge végétale/substance amylacée (intervenant comme milieu nutritif carboné pour les microorganismes contenus dans lesdites levures).

En bref, quel que soit le moyen (d), on recommande un traitement du mélange de base contenant les quatres ingrédients (a), (b), (c) et (d) avec un gradient de température allant jusqu'à 200°C, de préférence de 50 à 180°C, pour réaliser l'expansion ou l'achever si elle a été initiée à une température plus basse, et mieux dans le cadre de levures de 140 à 180°C.

Selon un autre mode de réalisation préféré selon l'invention, le mélange de base éventuellement complété en additifs auxiliaires est homogénéisé dans une extrudeuse avant expansion ou injection/moulage, selon un gradient de température de 20°C à 200°C similaire à ce qui a été indiqué plus haut.

## MEILLEUR MODE DE MISE EN OEUVRE DU PROCEDE

On a donné ci-après le meilleur mode de mise en oeuvre du procédé de l'invention.

Les fibres végétales cellulosiques sont mises en suspension dans de l'eau selon un procédé papetier classique : désintégration dans un pulpeur ou cuvier à pâte entre 30 et 400 g/l. De façon avantageuse, ces fibres cellulosiques ne sont pas raffinées comme il est d'usage dans la fabrication usuelle des papiers et des cartons ; avec des fibres non raffinées ou peu raffinées, on favorise l'enchevêtrement des moyens (a), (b) et (c).

La charge végétale est incorporée sous agitation pendant au plus 10 minutes (de préférence 1-3 minutes) dans la suspension ou dispersion aqueuse contenant les fibres cellulosiques. Le polymère naturel amylacé est directement introduit sous agitation dans le mélange fibres/charge végétale résultant, avec si nécessaire, les autres additifs auxiliaires, le mélange résultant est maintenu sous agitation pour l'obtention d'un mélange homogène et pour l'incorporation d'air favorable à l'expansion. L'agent d'expansion est introduit soit avec la charge végétale, soit avec ledit polymère naturel amylacé.

Le mélange résultant est amené ou maintenu en suspension dans de l'eau, à une concentration comprise entre 2 à 60 % p/v, selon les types de matériel et notamment des puissances disponibles pour l'agitation du mélange de base éventuellement complété par un ou plusieurs autres additifs auxiliaires. Bien entendu, il est préférable de travailler aux concentrations les plus élevées pour minimiser le coût du séchage.

Le mélange de base, constitué par l'ensemble fibres végétales/charge végétale/polymère naturel amylacé/agent d'expansion et éventuellement complété par un ou plusieurs additifs auxiliaires, est égoutté selon une technique classique papetière sur une table plate ou inclinée, à un (mono-jet) ou plusieurs jets (multi-jets) ou encore au moyen de plusieurs tables.

Après égouttage, le matériau formé passe dans au moins un dispositif de séchage pouvant fonctionner à air chaud, aux infrarouges et/ou aux hautes fréquences. Le séchage, qui peut mettre en oeuvre plusieurs dispositifs différents de séchage, permet (i) d'effectuer ou parachever l'expansion, et d'atteindre l'épaisseur souhaitée du matériau végétal expansé, ladite épaisseur pouvant être comprise entre 0,5 et 20 cm par exemple, et notamment 3 et 10 cm, et (ii) de sécher complètement ledit matériau avant découpe en plaques, aux dimensions souhaitées pour les différents usages.

Le matériau végétal selon l'invention peut également être obtenu à partir d'un mélange de base de concentration plus élevée pouvant aller jusqu'à 90 % p/v, en particulier à une concentration comprise entre 30 et 80 % p/v et notamment entre 30 et 60 % p/v, au moyen d'une extrudeuse du type bi-vis analogue à celle utilisée dans l'industrie des matières plastiques et de l'agro-alimentaire ou comparable à celle utilisée en papeterie pour la fabrication de pâtes à haut rendement. Le mélange de base, éventuellement complété par un ou plusieurs additifs auxiliaires, est homogénéisé avant d'être expansé en ligne sous forme de matériau en feuille, panneau ou flocons.

Le matériau végétal expansé ainsi obtenu est particulièrement apte à la découpe, à l'usinage et à la mise en forme. L'ajustement de l'épaisseur en fonction des besoins du marché peut être aisément obtenu par découpe en continu, par exemple avec un fil métallique ou par découpe laser.

Les chutes de production sont totalement recyclables dans le procédé de l'invention, dès lors qu'il est très aisé de les désintégrer avec les fibres végétales lors de la mise en oeuvre de l'étape 1°.

Le matériau résultant qui a une composition essentiellement végétale ou naturelle peut subir, selon les applications visées, un traitement de finition sur ou hors machine, notamment par pulvérisation dans un tunnel approprié, enduction, imprégnation, ledit traitement de finition étant suivi d'un nouveau séchage. Le traitement de finition a pour but de conférer au matériau végétal des propriétés qu'il n'a pas en l'état afin qu'il puisse répondre aux exigences du marché. Des traitement spécifiques peuvent être nécessaires pour :

- améliorer les propriétés superficielles, notamment augmenter la résistance aux frottements, à l'abrasion, au peluchage et aux manutentions ; dans ce but, on utilisera avantageusement un polymère naturel tel que l'amidon, la fécule de pomme de terre et leurs dérivés ;
- conférer la résistance à l'eau et à l'humidité ;
- conférer la résistance à la flamme ;
- adapter son aspect de surface ou le colorer ; et, si nécessaire,
- augmenter la stabilité dimensionnelle et/ou
- augmenter la cohésion d'ensemble.

Le matériau végétal expansé suivant l'invention, finement broyé, peut également être combiné à un polymère naturel pour injection/moulage, ou peut donner également des matériaux complexes avec d'autres produits en feuille classiques ou spéciaux tels que les produits cellulosiques comme le papier et le carton, les cellodermes, les revêtements, les supports d'enduction, dans le but d'obtenir de nouveaux matériaux utiles.

Ces matériaux complexes peuvent notamment être obtenus par contrecollage ou thermoscellage sur une ou deux faces (sandwichs constitués par un matériau végétal expansé disposé entre deux feuilles de carton ou papier).

## UTILISATION DU MATERIAU VEGETAL EXPANSE

Le matériau végétal expansé est particulièrement utile dans le domaine des matériaux de calage, de protection dans tous les secteurs de l'emballage et du conditionnement, et dans le domaine de la construction (panneaux isolants, cornières). Ledit matériau végétal expansé est industriellement très intéressant eu égard à sa recyclabilité totale (il ne pollue donc pas l'environnement), à sa bonne aptitude à l'emboutissage, à sa résistance à la compression, à la perforation, aux vibrations et aux chocs. Ledit matériau végétal expansé peut remplacer très avantageusement les mousses de polyéthylène, polypropylène, polystyrène, polyester et polyuréthane expansées, les mousses verre/matière plastique, les produits en vrac et les matériaux de remplissage en matière plastique, et enfin les mousses souples ou rigides qui présentent l'inconvénient rédhibitoire de ne pas être recyclables et de nuire à la protection de l'environnement.

Compte tenu du choix des composants d'origine végétale, notamment en ce qui concerne les fibres cellulosiques, le matériau végétal expansé pourrait être, après usage, facilement recyclé comme produit complémentaire dans l'alimentation animale.

Le matériau végétal expansé peut également trouver des débouchés dans l'industrie automobile en tant que produit de protection, dans l'industrie du bâtiment et de la construction, soit seul, soit associé à d'autres matériaux classiques (plaques de plâtre, panneaux de particules, articles de menuiserie industrielle, structures préfabriquées en béton ou ciment), pour former des cloisons rigides, des cornières, des revêtements de sols, de revêtements de plafonds et des revêtements muraux.

Par ailleurs, le matériau végétal expansé est susceptible d'être exploité dans la fabrication de supports d'enduction ou cellodermes destinés à l'industrie de la maroquinerie, de la chaussure ou de divers matériaux décoratifs. En règle générale, pour ces applications, ledit matériau est soumis à un traitement sur ou hors machine avec des matières polymères de nature différente des ingrédients du mélange de base pour conférer les caractéristiques nécessaires à l'usage envisagé et qu'il n'a pas en l'état, en particulier les résistances aux frottements à l'état sec et humide.

Enfin, le matériau végétal selon l'invention et son procédé de préparation peuvent être utilisés dans la fabrication de papiers, cartons et cellodermes pour lesquels il est recherché une augmentation de l'épaisseur et une diminution de la densité. Dans ces dernières applications, les taux d'expansion et les épaisseurs souhaités sont relativement faibles comparativement aux matériaux de calage, de protection et d'emballage précités. A titre indicatif, les épaisseurs de ces papiers, cartons et cellodermes peuvent varier entre 0,05 à 20 mm.

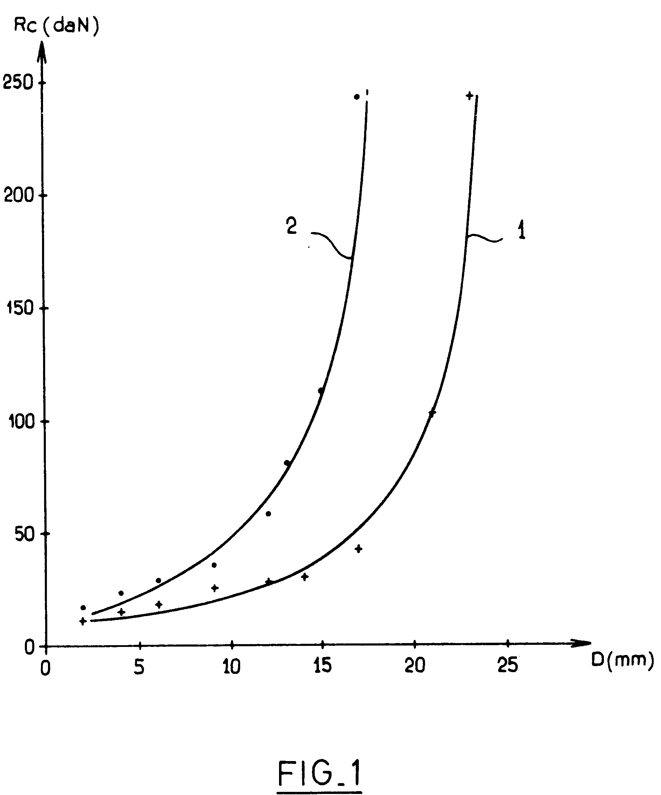

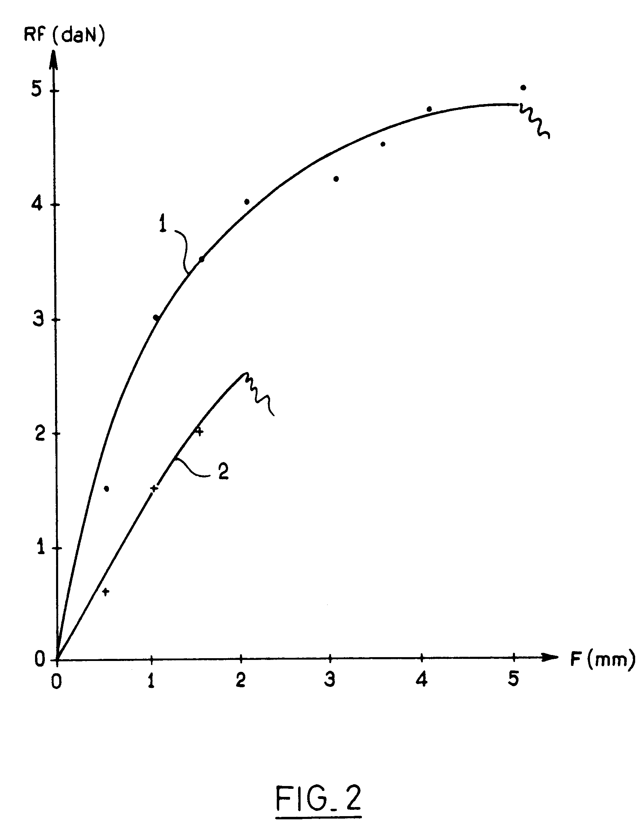

D'autres avantages et caractéristiques de l'invention seront mieux compris à la lecture qui va suivre d'exemples de réalisation relatifs à la préparation du matériau végétal selon l'invention et à son utilisation notamment dans le domaine du calage, de la protection et des revêtements. Bien entendu, l'ensemble de ces éléments n'est nullement limitatif mais est fourni à titre d'illustration. Dans les figures jointes en annexe, on a donné les courbes (1) pour le produit de l'exemple 1 et (2) pour le polystyrène expansé, en ce qui concerne (a) la résistance à la compression (Rc) exprimée en daN en fonction de la déformation (D) exprimée en mm (fig 1), et (b) la résistance à la flexion (Rf) exprimée en daN en fonction de la flèche (F) exprimée en mm (fig 2).

## Exemple 1

Dans un premier stade, on prépare sous agitation dans un cuvier, une suspension de fibres de résineux kraft écru à 50 g/l. La charge végétale produite à partir de rafles de mais sans les grains (particules inférieures à 0,3 mm) est introduite sous agitation dans la suspension de fibres végétales. La concentration est ajustée pour avoir une concentration du mélange résultant qui est de 5 à 8 % .

L'introduction de farine céréalière (farine de blé de granulométrie inférieure à 200 micromètres), s'effectue directement dans le mélange fibres/charges, ainsi qu'une levure chimique (à base de bicarbonate de sodium), et le tout est homogénéisé sous agitation à une concentration de 3 à 10 % .

Le mélange de base a la concentration suivante :
- fibres cellulosiques : 70 parties en poids
- charge végétale (CV) : 20 parties en poids
- farine de blé : 10 parties en poids
- levure chimique : 2 parties en poids

Le mélange est maintenu sous agitation durant 5 à 10 minutes pour l'homogénéiser correctement et favoriser l'incorporation d'air.

Le mélange ainsi constitué est égoutté à travers une toile métallique du type de celle d'une machine à papier classique avant d'être séché dans un tunnel ventilé avec un gradient de température de 50°C à 150°C ou plus.

L'expansion commence à se produire dès la préparation du mélange de base et se poursuit au cours de l'égouttage et du séchage du matériau.

L'épaisseur finale atteinte est de 30 mm.

Le tableau 1 ci-après donne les caractéristiques comparatives du nouveau matériau ainsi obtenu par rapport au polystyrène expansé utilisé dans le calage des produits électroménagers et équipements audio-vidéo.

Les résultats du tableau 1 montrent qu'avec la composition de l'exemple 1, le nouveau matériau objet de l'invention est doté de résistances mécaniques beaucoup plus élevées que celles du polystyrène expansé :

1. **Résistance à la compression, à l'écrasement :** 1,7 fois supérieure ; le nouveau matériau se prête mieux au gerbage.

La figure 1 ci-après montre nettement les différences entre le nouveau matériau et le polystyrène expansé.

Avec une pression d'écrasement maximale (240 daN), le taux de vide enlevé avec le polystyrène est de 75 % alors qu'il n'est que de 50 % avec le nouveau matériau qui encaisse mieux les efforts et se déforme moins sous l'effet des contraintes externes. Le polystyrène a un taux de vide 1,5 fois plus élevé que celui du nouveau matériau. Ces caractéristiques peuvent permettre pour le même usage, l'emploi d'un matériau de calage d'épaisseur environ 1,5 à 2 fois plus faible. Les performances de ce nouveau matériau peuvent être notamment exploitées pour la diminution du coût unitaire de transport de 30 à 40 % .

2. **Emboutissabilité :** le nouveau matériau a une meilleure aptitude à l'emboutissage : taux d'écrasement avant rupture deux fois plus elevé que le polystyrène.

3. **Résistance à la traction :** elle est quatre fois elevée pour le matériau selon l'invention.

4. **Rigidité :** le nouveau matériau est deux fois plus résistant à la flexion et a une déformation maximale en flexion sans rupture deux fois plus élevée.

5. **Résistance à la perforation :** elle est 10 fois plus élevée avec le matériau végétal selon l'invention.

6. Résistance à la torsion : elle est 1,5 à 2 fois plus élevée avec le matériau selon l'invention.

Le matériau végétal expansé obtenu selon l'exemple 1 est utilisable dans le domaine du calage, de la protection et de l'emballage est très facilement recyclable par désintégration dans l'eau et pour réutilisation soit pour une nouvelle fabrication du matériau, soit pour la fabrication de papiers, cartons d'emballage et cellodermes.

7. **Résistance à la flexion :** la figure 2 ci-après montre que le nouveau matériau selon l'invention est beaucoup plus performant que le polystyrène expansé. Ce produit qui est constitué essentiellement de matières végétales pourrait être également utilisé comme produit complémentaire à l'alimentation animale.

## Exemple 2

On prépare un matériau végétal expansé selon les modalités de l'exemple 1, avec la différence que l'on utilise une pâte chimico-thermomécanique de hêtre produite selon le procédé "BIVIS" précité. Ces fibres végétales sont connues comme étant moins performantes sur le plan mécanique que celles de l'exemple 1 ci-dessus. Tous les autres composants (charge végétale, farine de blé, agent levant) et les conditions de fabrication restent inchangées.

Par rapport à l'exemple 1, le matériau obtenu selon l'exemple 2
- est plus rigide de 10 à 20 %
- aussi résistant à l'écrasement
- aussi résistant à la perforation
- moins résistant à la traction de 15 à 20 % .

Le matériau de l'exemple 2 est beaucoup plus performant que le polystyrène expansé et il est 100 % recyclable. Il peut être exploité dans le domaine de la menuiserie pour les intérieurs de porte, le remplissage de cloison et l'isolation phonique.

## Exemple 3

On prépare un matériau végétal expansé selon les modalités de l'exemple 1, avec la différence que l'on utilise une pâte de paille à haut rendement produite par le procédé "BIVIS". Le matériau végétal expansé qui est obtenu est comparable à celui de l'exemple 2 mais avec une résistance à la perforation plus élevée de 15 % et une rigidité supérieure de 10 % .

### Exemple 4

On prépare un matériau végétal expansé selon les modalités de l'exemple 1, avec la différence que l'on utilise le mélange de base suivant dans lequel la substance amylacée est constituée de farine de seigle et d'amidon de blé :
- Fibres végétales
  (résineux kraft blanchi) :        50 parties en poids
- Charge végétale (produite à partir de sciure de pin maritime et ayant des particules inférieures à 0,200 mm) :        40 parties en poids
- Farine de seigle :        6 parties en poids
- Amidon de blé :        2 parties en poids
- Levure de boulangerie :        2 parties en poids.

Le matériau obtenu a des caractéristiques comparables à celles du matériau obtenu comme indiqué ci-dessus à l'exemple 1.

### Exemple 5

On ajoute dans le mélange de base de l'exemple 1 de l'acide ascorbique à la dose de 0,5 partie en poids. On observe que le pouvoir d'expansion au cours du séchage est amélioré.

### Exemple 6

On prépare un matériau végétal expansé selon les modalités de l'exemple 1, avec la différence que l'on utilise le mélange de base suivant contenant de l'acide ascorbique :
- Fibres cellulosiques (provenant de vieux cartons d'emballage et de sacs en kraft écru) :        40 parties en poids
- Charge végétale (produite à partir de brisures et copeaux hors normes d'une usine de pâte kraft et ayant une ganulométrie inférieure à 0,5 mm) :        50 parties en poids
- Mélange de farines (blé/fine d'orge/son de blé) micronisées selon une granulométrie inférieure à 250 micromètres :        15 parties en poids
- Fécule de pomme de terre :        1 partie en poids
- Agent levant biologique ou enzyme :        0,5 partie en poids
- Acide ascorbique :        0,2 partie en poids.

On obtient un matériau expansé de 10 cm d'épaisseur et de densité comprise entre 100 et 130 kg/m$^3$, qui présente les caractéristiques mécaniques suivantes :
- taux d'écrasement à 240 daN :        45 %
- résistance à 20 % d'écrasement :        35 daN
- taux d'écrasement sans rupture de surface :        40 %
- résistance à la perforation :        3 200 g
- résistance à la traction :        52 N.

Le matériau obtenu à l'exemple 6 a été soumis à une opération de coloration par pulvérisation puis a été de nouveau séché dans un tunnel à une température supérieure à 110°. Le produit résultant est décoratif et utilisable pour la confection de calages protecteurs pour coffrets de luxe destinés au conditionnement des parfums.

### Exemple 7

On prépare un matériau végétal expansé selon les modalités de l'exemple 1, avec la différence que l'on utilise le mélange de base donné ci-après et additionné d'agents diminuant la sensibilité à l'eau et augmentant la résistance à l'état humide, la composition utilisée étant la suivante :
- Fibres cellulosiques :        60 parties en poids
- Charge végétale (rafles de mais, i.e. épi de mais sans les grains) :        30 parties en poids
- Farine de pommme de terre :        10 parties en poids
- Levure chimique :        2 parties en poids
- Alkylcétène dimère :        1 partie en poids*
- Emulsion de paraffine :        0,5 partie en poids*
- Note (*) = partie en poids sec -

Le matériau expansé ainsi obtenu après égouttage et séchage selon les conditions d'égouttage et de séchage de l'exemple 1 est soumis à une imprégnation avec une solution classique de sels ignifugeants pour le rendre le ininflammable.

Le matériau résultant se caractérise par de bonnes propriétés d'ensemble, d'isolation phonique, acoustique et électrique et il peut être avantageusement utilisé dans la construction et le bâtiment. Ce matériau peut être également contrecollé sur 1 ou 2 faces avec une feuille en papier kraft pour améliorer sa résistance à l'abrasion de surface au cours des manutentions et des travaux usuels du domaine de la construction et du bâtiment.

### Exemple 8

Le matériau obtenu selon l'exemple 1 est fragmenté en "chips" de volumes variables entre 1 et 10 cm³. Les fragments ainsi obtenus, peuvent être utilisés pour le calage en vrac, par remplissage des emballages, ou pour la fabrication de coussins de calage recyclables.

### Exemple 9

On prépare un matériau végétal expansé de rigidité élevée pour la fabrication de cornières très résistantes aux chocs, selon les modalités de l'exemple 1 avec la différence que l'on utilise le mélange de base suivant :
- Fibres kraft écrues :          40 parties en poids
- Charge végétale obtenue à partir de refus de la production de charges pour l'industrie papetière, et conforme aux deux demandes PCT publiées WO-A-89/05884 et WO-A-90/15900 précitées (95 % des particules de ladite charge végétale ont un diamètre moyen compris entre 0,15 et 0,3 mm), la matière première utilisée étant ici un mélange de bois de récupération (palettes, containers) et de petits bois de l'exploitation forestière (branches, rémanents, etc.)) :          30 parties en poids
- Mélange de farines céréalières : (blé, sarrasin, seigle, orge) :          30 parties en poids
- Levure de bière :          1 partie en poids.

Les conditions d'égouttage et de séchage sont identiques à celles de l'exemple 1. Le matériau ainsi obtenu qui a une épaisseur voisine de 15 cm, présente une résistance à la perforation 20 % supérieure et une rigidité 30 % supérieure à celle du matériau obtenu selon l'exemple 1.

### Exemple 10

Le matériau obtenu selon l'exemple 1, d'épaisseur 3 cm, est contrecollé recto/verso (recto : support en tissu ; et, verso : support cellulosique) pour l'obtention d'un nouveau revêtement mural et de plafond doté de bonnes propriétés d'isolation phonique.

### Exemple 11

On réalise suivant la composition de l'exemple 3, un matériau expansé d'épaisseur comprise entre 4 et 10 mm (exemple 11a : épaisseur 4 mm ; exemple 11b : épaisseur 6 mm ; exemple 11c : épaisseur 8 mm ; et exemple 11d : épaisseur 10 mm). On observe que chaque matériau végétal expansé est résistant à la perforation, à la traction pour la réalisation de semelle de chaussure.

### Exemple 12

On réalise un complexe rigide avec le matériau végétal expansé obtenu selon l'exemple 1, 2 ou 4 pris en sandwich entre deux couches de carton ondulé (une couche recto/une couche verso) pour l'obtention de containers dits "en carton" de bonnes performances contre les chocs pour le transport longue distance de produits fragiles.

### Exemple 13

Le complexe de l'exemple 12 ci-dessus est réalisé avec du carton pour la réalisation d'emballages de luxe, afin d'obtenir un produit de conditionnement pour les parfums, les cosmétiques, les articles de santé-beauté, les alcools et les spiritueux.

### Exemple 14

On prépare un matériau végétal expansé selon les modalités de l'exemple 1, avec la différence que l'on utilise le mélange de base donné ci-après, dans lequel la charge végétale et une portion de la substance amylacée proviennent des mêmes végétaux :
- fibres cellulosiques :          50 parties en poids
- Charge végale (provenant de rafles de mais sans les grains) :          5 parties en poids
- Farine de mais et farine de blé avec son :          40 parties en poids
- Gluten :          3 parties en poids
- Levure de bière :          2 parties en poids

Le mélange est correctement agité pour l'homogénéiser et pour incorporer de l'air et amorcer l'expansion. Les autres conditions de fabrication sont celles de l'exemple 1.

On obtient un matériau souple moins emboutissable que celui de l'exemple 1 mais tout à fait apte à la réalisation de revêtements isolants.

### Exemple 15

Le matériau obtenu selon l'exemple 14 ci-dessus est enduit d'amidon sur une face pour améliorer les résistances superficielles du matériau.

### Exemple 16

On produit un carton intérieur bois multi-jets de 300 g/m².

**Composition standard** (antérieurement connue) :

a) jets pour intérieur : pâte mécanique écrue pour un grammage [avec amidon cationique (2 % sec) et collage colophane conventionnel] de 250 g/m².
b) couche fibreuse recto : pâte kraft résineux/feuillus blanchi (60/40) d'un grammage de 25 g/m².
c) couchage pigmenté : composition classique impression écriture (kaolin, carbonate, amidon, latex, azurants..) d'un grammage de 25 g/m².

**Nouvelle composition :**

On remplace la composition intérieure par la composition suivantes :
- Pâte mécanique écrue :          60 parties en poids
- Charge végétale (produite à partir de rafles de mais et ayant des particules d'un diamètre moyen inférieur à 0,2 mm) :          15 parties en poids
- Amidon de blé :          5 parties en poids
- Gluten :          0,5 partie en poids
- Agent d'expansion (bicarbonate de sodium) :          0,5 partie en poids.

Tous les autres composants et les proportions couches intérieures/recto restent identiques au témoin de la composition standard. Le séchage est identique dans les deux cas.

Le nouveau matériau conforme à l'invention est beaucoup plus bouffant : augmentation de l'épaisseur de 20 % par rapport au matériau conforme à la composition standard précitée.

### Exemple 17

On réalise un mélange très concentré de fibres végétales/charge végétale/substance amylacée/agent d'expansion suivant la formulation de l'exemple 9 (la concentration dudit mélange dans de l'eau étant comprise entre 50 et 80 % p/v), au moyen d'une extrudeuse "BIVIS" classique utilisée dans l'industrie agro-alimentaire. La pâte ainsi formée est expansée en ligne après passage dans une deuxième extrudeuse classique. Le matériau végétal expansé, qui est ainsi obtenu, se présente sous la forme de flocons utiles pour le calage en vrac.

### Exemple 18 et essais comparatifs

On a préparé en parallèle un matériau végétal conforme à l'invention (Exemple 18) et des matériaux conformes à l'enseignement des documents GB-A-2 050 459 et WO-A-90/14935 précités (CP 1 et CP 2), selon les formulations données dans le tableau 2 ci-après, afin de comparer l'influence de la présence ou de l'absence de la charge végétale sur la densité et les propriétés mécaniques. Suivant ces formulations, l'exemple 8 comporte une charge végétale, CP 1 comporte une charge minérale (selon l'enseignement de GB-A-2 050 459) et CP 2 ne comporte aucune charge tant végétale que minérale (selon l'enseignement de WO-A-90/14935).

On introduit directement la substance amylacée et l'agent d'expansion dans la suspension aqueuse de fibres et de charges (concentration : 10 à 15 % p/v) et sous agitation. L'agitation est maitenue pendant au moins 5 minutes pour favoriser l'homogénéisation du mélange résultant et la constitution du réseau intersticiel fibres/charge avec incorporation d'air (amorce d'expansion). On réalise une formette par égouttage sur une toile métallique puis séchage dans une étuve ventilée (air chaud à 180°C) pendant 15 minutes pour parachever l'expansion, afin d'obtenir le produit de l'exemple 18.

Les produits CP 1 et CP 2 sont préparés selon le même procédé, en remplaçant la charge végétale de Ex 18 par une charge minérale (CP 1) ou en supprimant la charge végétale (CP 2).

## TABLEAU 2

### Composition (en parties en poids)

| Ingrédients | Ex 18 | CP 1 | CP 2 |
|---|---|---|---|
| fibres cellulosiques[1] | 50 | 50 | 50 |
| charge végétale[2] | 40 | - | - |
| charge minérale[3] | - | 40 | - |
| farine de blé[4] | 10 | 10 | 10 |
| bicarbonate de sodium | 0,7 | 0,7 | 0,7 |
| acide ascorbique | 0,3 | 0,3 | 0,3 |

Notes

    (1) : fibres de résineux kraft écru

    (2) : produite à partir de sciure de pin maritime (granulométrie inférieure à 0,200 mm)

    (3) : talc (granulométrie inférieure à 0,05 mm)

    (4) : granulométrie inférieure à 0,200 mm

Les résultats des essais entrepris avec les matériaux obtenus selon Ex 18, CP 1 et CP 2 sont consignés dans le tableau 3 ci-après. Ils montrent que la présence d'une charge végétale conduit à (i) une expansion plus importante, (ii) une densité plus faible, (iii) une augmentation de la résistance à la flexion et (iv) une meilleure aptitude à l'emboutissabilité.

Ces essais comparatifs illustrent l'importance de la charge végétale non liante pour augmenter de façon notable l'élasticité, le pouvoir amortisseur du matériau car les charges créent uniquement des vides intersticiels favorisant l'expansion et la compressibilité.

## TABLEAU 3
### Propriétés mécaniques

| Mesures | Ex 18 | CP 1 | CP 2 |
|---|---|---|---|
| épaisseur du matériau expansé (mm) | 30 | 21 | 18 |
| densité (kg/m$^3$) | 125 | 240 | 253 |
| emboutissabilité[5] (%) | 50 | 12 | 10 |
| résistance à la flexion[6] | | | |
| - flèche à 1 mm (daN) | 3 | 2,1 | 1,8 |
| - rupture (daN) | 5 | 2,8 | 2 |

Notes

  (5) : taux d'écrasement sans rupture de surface avec bille de 30 mm de diamètre

  (6) : sur éprouvette d'essai de 60 x 15 x 30 mm

| | | | |
|---|---|---|---|
| | | **NOUVEAU MATERIAU EXPANSE VEGETAL** | **POLYSTYRENE EXPANSE** |
| COMPOSITION | | 100 % Végétal | 100 % Plastiques |
| TYPE DE STRUCTURE | | Conglomérats de : - fibres végétales recouvertes en partie de CV. - CV et agglomérats de CV. - Parois amylacés filiformes et en forme de ruban. - Vides intersticiels de diamètre équivalent 50 à 100 microns. | Agglomérats de billes composées de : Cellules fermées et semi ouvertes de diamètre équivalent 2 à 50 microns |
| RECYCLABILITE | | 100 % recyclable | non recyclable |
| EPAISSEUR (mm) | | 30 | 30 |
| DENSITE (Kg/m3) | | 120 | 30 |

**TABLEAU 1**

**CARACTERISTIQUES COMPARATIVES DES MATERIAUX**

TABLEAU 1 (Fin)

| CARACTERISTIQUES MECANIQUES SUR EPROUVETTE (EPROUVETTE L*l*e) | | |
|---|---|---|
| COMPRESSION (sur éprouvette 80*15*30 mm - mesure sur épaisseur e) | | |
| RESISTANCE A 10 % D' ECRASEMENT (daN) | 20 | 12 |
| RESISTANCE A 20 % D' ECRASEMENT (daN) | 30 | 18 |
| TAUX D'ECRASEMENT à 240 daN | 53 % | 76 % |
| DURETE SHORE | 60 | 32 |
| EMBOUTISSABILITE (Taux d'écrasement sans rupture de surface bille diamètre 30 mm) | 50 % | 20 % |
| RESISTANCE A LA TRACTION (N) | 66 | 16 |
| ALLONGEMENT A LA RUPTURE | 1,3 % | 1,5 % |
| RIGIDITE (3 Points sur la hauteur) Résistance à la flexion éprouvette 60*15*30 mm L*l*h mesurée sur 3 points de flèche (daN) | | |
| FLECHE 1 mm | 3 | 1,5 |
| FLECHE 2 mm | 4 | 2,5 Rupture |
| FLECHE 4 mm | 5 Rupture | |
| PERFORATION Résistance transpercement à l'aiguille de 1mm de diamètre (épaisseur échantillon 10 mm) | 3500 g depuis la surface  1100 g depuis la paroi latérale | 300 g depuis les 3 parois |
| TORSION (éprouvette de 60*30*8 mm) Résistance à la rupture Angle de torsion à la rupture | 1200 g  45 ° | 700 g  45 ° |

## Revendications

1. Matériau expansé essentiellement végétal, ledit matériau, qui comprend des fibres, une charge et une substance amylacée, et a une densité inférieure à 300 kg/m³, étant caractérisé en ce qu'il renferme

(a) des fibres végétales, de préférence cellulosiques,

(b) une charge végétale pulvérulente ayant une granulométrie inférieure à 1,5 mm et de préférence comprise entre 0,01 et 0,5 mm, et provenant de l'industrie du bois, de déchets de bois ou de végétaux et/ou de l'industrie agroalimentaire, et

(c) une substance amylacée, de préférence un polymère naturel amylacé,

et en ce qu'il a été expansé sous l'action de

(d) un agent d'expansion incorporé dans le mélange desdites fibres, de ladite charge végétale et de ladite substance amylacée.

2. Matériau suivant la revendication 1, caractérisé en ce que ladite substance amylacée est choisie parmi l'ensemble constitué par l'amidon, les matériaux contenant de l'amidon et leurs mélanges.

3. Matériau suivant la revendication 2, caractérisé en ce que ladite substance amylacée est choisie parmi l'ensemble constitué par les farines de céréales, les farines de légumineuses, les issues desdites farines et leurs mélanges.

4. Matériau suivant la revendication 1, caractérisé en ce que ledit agent d'expansion est choisi parmi l'ensemble constitué par

- les gaz inertes,
- les colloides entraîneurs de gaz, et
- les moyens libérant un gaz par voie enzymatique, par fermentation et/ou sous l'action de la chaleur.

5. Matériau suivant la revendication 4, caractérisé en ce que l'agent d'expansion est choisi parmi l'ensemble constitué par les ferments et levures de boulangerie, les ferments et levures de bière et la levure chimique.

6. Matériau suivant la revendication 1, caractérisé en ce qu'il renferme

(a) de 15 à 85 parties en poids de fibres végétales,

(b) de 5 à 80 parties en poids d'une charge végétale, et

(c) au plus 70 parties en poids d'une substance amylacée choisie parmi l'ensemble constitué par l'amidon, les matériaux contenant de l'amidon et leurs mélanges, et

en ce que l'on a utilisé pour l'expansion

(d) au plus 20 parties en poids d'un agent d'expansion.

7. Matériau suivant la revendication 1, caractérisé en ce qu'il renferme

(a) de 15 à 85 parties en poids de fibres végétales,

(b) de 5 à 80 parties en poids d'une charge végétale,

(c) de 1 à 20 parties en poids d'une substance amylacée choisie parmi l'ensemble constitué par l'amidon et les matériaux contenant de l'amidon et leurs mélanges, et

en ce que l'on a utilisé pour l'expansion

(d) de 0,01 à 10 parties en poids d'un agent d'expansion.

8. Matériau suivant l'une quelconque des revendications 1 à 7, caractérisé en ce qu'il a été expansé *in situ* par incorporation ou libération d'un gaz, et en ce qu'il présente après expansion une densité comprise entre 20 et 250 kg/m³, et une dureté Shore comprise entre 10 et 150.

9. Matériau suivant la revendication 8, caractérisé en ce que l'expansion est réalisée par introduction de l'agent d'expansion

(i) lors de la préparation du mélange fibres/ charge végétale/polymère amylacé,

(ii) dans le mélange fibres/charge végétale/ polymère amylacé préalablement formé, avant séchage, et/ou

(iii) dans le mélange fibres/charge végétale/ polymère amylacé, pendant le séchage, pour l'incorporation d'air ou d'un gaz naturel inerte.

10. Matériau suivant l'une quelconque des revendications 8 et 9, caractérisé en ce que l'expansion est favorisée par un séchage réalisé avec un gradient de température se situant dans la gamme de 20 à 200°C.

11. Matériau suivant l'une quelconque des revendications 1 à 10, caractérisé en ce que les fibres végétales sont des fibres papetières cellulosiques.

12. Procédé de préparation d'un matériau essentiellement végétal et expansé selon l'une quelconque des revendications 1 à 11, à partir (a) de fibres végétales, (b) d'une charge végétale, (c) d'une substance amylacée, de préférence un polymère naturel amylacé et (d) d'un agent d'expansion, ledit procédé étant caractérisé en ce qu'il comprend les étapes consistant à :

(A) préparer un mélange homogénéisé de fibres (a), de charge végétale (b) et de substance amylacée (c), et

(B) sécher ledit mélange à une température comprise entre 20 et 200°C,

l'agent d'expansion (d) étant introduit

(i) lors de la préparation du mélange fibres/charge végétale/substance amylacée,

(ii) dans le mélange fibres/charge végétale/substance amylacée préalablement formé, avant séchage, et/ou

(iii) dans le mélange fibres/charge végétale/substance amylacée, pendant le séchage,

pour incorporation d'air ou de gaz naturel inerte dans ledit mélange fibres/charge végétale/substance amylacée, au cours de la formation dudit matériau expansé.

13. Procédé suivant la revendication 12, caractérisé en ce que les étapes (A) et (B) sont réalisées par voie papetière, le mélange homogénéisé de l'étape (A) étant en suspension aqueuse.

14. Procédé suivant la revendication 12, caractérisé en ce que l'étape (B) est réalisée selon une technique de l'industrie des matières plastiques ou de l'agroalimentaire notamment au moyen d'une extrudeuse.

15. Procédé suivant la revendication 12, caractérisé en ce que l'étape (B) est réalisée par extrusion, ou injection/moulage.

16. Utilisation du matériau végétal expansé suivant l'une quelconque des revendications 1 à 11 dans le domaine du calage, de l'emballage, des revêtements et de la protection.

17. Utilisation du matériau végétal expansé suivant l'une quelconque des revendications 1 à 11 dans le domaine des supports d'enduction et des papiers et cartons bouffants.

FIG.1

FIG. 2